# EUROPÄISCHE PATENTSCHRIFT

(11) **EP 1 136 764 B1**
(45) Veröffentlichungstag und Bekanntmachung des Hinweises auf die Patenterteilung: **26.04.2006**
(21) Anmeldenummer: 01104013.6
(22) Anmeldetag: 20.02.2001
(51) Int. Cl.: F24H 8/00, F24H 9/00, F24H 1/24, F28F 3/02

(54) **Wärmetauscher für ein Gasbrennwertgerät**
Heat exchanger for gas fired condensing boiler
Echangeur de chaleur pour chaudière à gaz à haut rendement

(30) Priorität: 18.03.2000 DE 10013608
(43) Veröffentlichungstag der Anmeldung: 26.09.2001
(73) Patentinhaber: ROBERT BOSCH GMBH, 70442 Stuttgart (DE)
(72) Erfinder: Schmuker, Franz, 73117 Wangen (DE); Schaefer, Albrecht, 70771 Leinfelden-Echterdingen (DE); Glosok, Jan, 71336 Waiblingen (DE); Eichengrün, Stefan, 73277 Owen (DE)

(56) Entgegenhaltungen:
- EP-A- 0 498 749
- EP-A- 0 533 271
- EP-A- 0 599 796
- DE-A- 2 141 785
- DE-A- 3 624 708
- DE-B- 1 082 724
- DE-C- 538 742
- DE-U- 29 900 317
- FR-A- 957 533
- FR-A- 2 553 503

## Beschreibung

### Stand der Technik

Die Erfindung betrifft einen Wärmetauscher für ein Gasbrennwertgerät mit mindestens einem Rauchgaskanal, der von wassergekühlten Wärmetauscherwänden mit Oberflächenstruktur umgeben und zur Reinigung über eine Inspektionsöffnung zugänglich ist.

Derartige Wärmetauscher werden heute vielfach im Metallgußverfahren hergestellt, wobei Aluminium-Gußteile verwendet sind, die im Sandgußverfahren hergestellt sind. Damit auf kleinstem Raum und mit geringstem Materialaufwand eine effektive Wärmeübertragung zwischen dem Rauchgas und dem, den Wärmetauscher durchfließenden Wasser erhalten wird, sind die den Rauchgaskanal umschließenden Wärmetauscherwände mit einer die Oberfläche vergrößernden Oberflächenstruktur aus Rippen, Noppen und dergleichen versehen. Damit wird erreicht, dass die Restwärme des Rauchgases weitgehend genutzt wird. Dies führt allerdings zur Bildung von Kondensat an den Wärmetauscherwänden, das aufgrund der Rauchgasbestandteile sauer werden und zum Korrosionsangriff der Wärmetauscherwände führen kann. Werden relativ korrosionsfeste Aluminium-Silizium-Gußlegierungen bei der Herstellung des Wärmetauschers verwendet, dann kann es dennoch innerhalb der Lebensdauer des Wärmetauschers zum Ausfall desselben kommen. Ursache dafür kann das Zusetzen der Spalte der Oberflächenstruktur durch die stark ausblühenden Korrosionsprodukte des Aluminiums sein.

Aus DE 2 141 785 A ist ein gußeisener Gliedergasheizkessel mit an den Wärmetauscherwänden abstehend angeformten Noppen bekannt, wobei die Noppen in Strömungsrichtung benachbarter Reiher jeweils auf Lücke angeordnet sind.

Bei einem Wärmetauscherelement gemäß FR 957 533 A sind an einer Seite der Wärmetauscherwand ebenfalls abstehende Noppen als Wärmeübertragungselemente ausgebildet, die in Strömungsrichtung des Rauchgases einen kontinuierlich zunehmenden Querschnitt aufweisen.

Aus FR 2 553 503 A1 ist ein aus Wärmetauscherelementen zusammengesetzter Heizkessel bekannt. Die Wärmetauscherelement weisen quer zur Strömungsrichtung des Rauchgases an den Wärmetauscherwänden gegenüberliegend abstehend angeformte Noppen auf, die in benachbarten Reihen abwechselnd gegenüber der Mitte versetzt sind. Die gegenüberliegenden zapfenförmigen Noppen weisen dabei unterschiedlichen Querschnitt auf.

Es ist Aufgabe der Erfindung, einen Wärmetauscher der eingangs erwähnten Art mit einer Oberflächenstruktur von wärmeübertragenden Noppen an den Wärmetauscherwänden im Bereich des Rauchgaskanals zu versehen, die eine optimale Wärmeübertragung auf kleinstem Raum, einen verbesserten Strömungsverlauf sowie einen guten Kondensatablauf ermöglicht.

Die Aufgabe der Erfindung wird mit den kennzeichnenden Merkmalen des Anspruchs 1 gelöst. Durch die kennzeichnenden Maßnahmen des Anspruchs 1 wird die Wärmeübertragung und die Bildung von Turbulenzen im Rauchgaskanal verbessert, indem der gesamte Ruchgaskanal optimal für die Oberflächenvergrößerung und Turbulenzbildung ausgenützt wird. Durch die Turbulenzen in der Rauchgasströmung wird der Wärmeübergang verbessert. Der Querschnitt der Noppen begünstigt außerdem den Ablauf entstehenden Kondensats und den Wärmeübergang innerhalb der Noppen. Das Kondensat fließt in eine Kondensatauffangeinrichtung, die bei der Reinigung des Wärmetauschers auch die pulverförmigen Partikel aufnimmt, die von den Noppen und den Wärmetauscherwänden entfernt werden.

Bei der Ausgestaltung der Oberflächenstruktur entstehen außerdem zwischen den Noppen Reinigungskanäle, die mit mechanischen Mitteln, z.B. einer speziellen Bürste oder geeigneten Werkzeugen gereinigt werden können, da sie nach dem Öffnen der Inspektionsöffnung zugänglich sind.

Dabei ist eine Weiterbildung von Vorteilen, die dadurch gekennzeichnet ist, dass die Noppen der Einströmseite des Rauchgaskanal zugekehrt im Querschnitt kreisbogenförmig oder dachförmig auslaufen, sowie dass die Noppen der Ausströmseite des Rauchgaskanals zugekehrt im Querschnitt nahezu senkrecht zur Strömungsrichtung enden. Dies bringt einen noch besseren Strömungsverlauf und einen guten Kondensatablauf.

Zur Bildung der Reinigungskanälen ausreichender Breite sieht eine Ausgestaltung vor, dass die Reihen von Noppen in Strömungsrichtung des Rauchgases einen Abstand aufweisen, der etwa der Abmessung der Noppen in Strömungsrichtung entspricht.

Es können die Noppen in verschiedenen Reihen auch unterschiedliche Querschnitte aufweisen. Die in aufeinander ausgerichteten Reihen von Noppen 14 sind die Querschnitte der Noppenpaare gleich.

Die Erfindung wird anhand eines in den Zeichnungen dargstellten Ausführungsbeispieles näher erläutert.

Es zeigen:
Figur 1 in perspektivischer Ansicht einen Wärmetauscher nach der Erfindung mit geöffneter Inspektionsöffnung,
Figur 2 eine Ansicht auf die Frontseite des Wärmetauschers mit der Inspektionsöffnung,
Figur 3 einen Längsschnitt durch den Wärmetauscher parallel zur Inspektionsöffnung,
Figur 4 eine Teilansicht auf eine Wärmetauscherwand mit abstehend angeformten, stabförmigen Noppen, und
Figur 5 verschiedene Querschnittsformen für die Noppen.

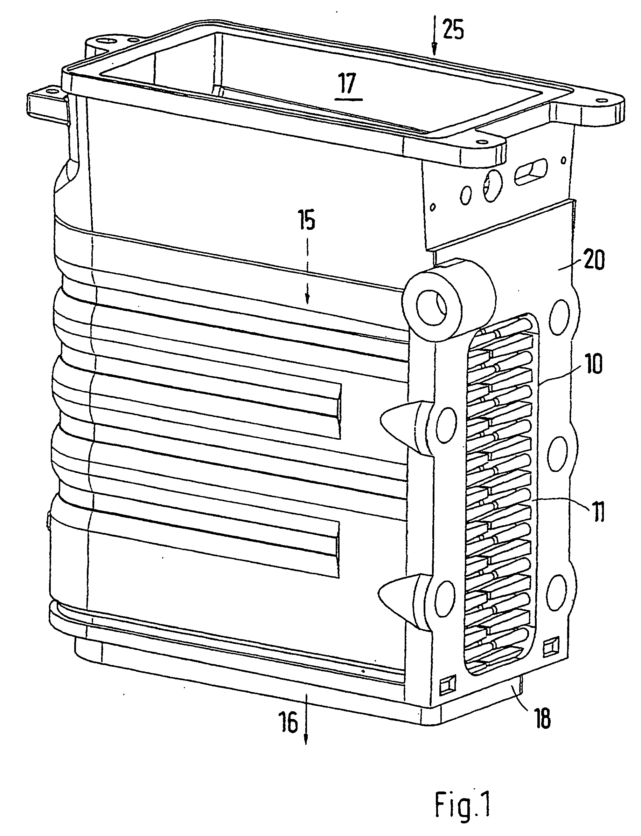

Der Wärmetauscher 20 nach Fig. 1 bis 3 ist als Metallgußblock hergestellt, wobei Aluminium als Ausgangsmaterial verwendet ist. Dabei kann der obere Bereich einen Teil der Brennkammer 17 bilden oder mit einem getrennten Brennkammerteil verbunden sein. Aus der Brennkammer strömt das Rauchgas in einen Rauchgaskanal als einströmendes Rauchgas 15 in den Wärmetauscher 20. Der Rauchgaskanal wird von Wärmetauscherwänden 11 und 12 umgeben, die von Wasserkanälen gekühlt sind. Die Wärme des Rauchgases wird über dem Wärmetauscher 20 an das Wasser übertragen. Das abgekühlte Rauchgas tritt als ausströmendes Rauchgas 16 am Rauchgasauslass 18 aus dem Wärmetauscher 20 aus.

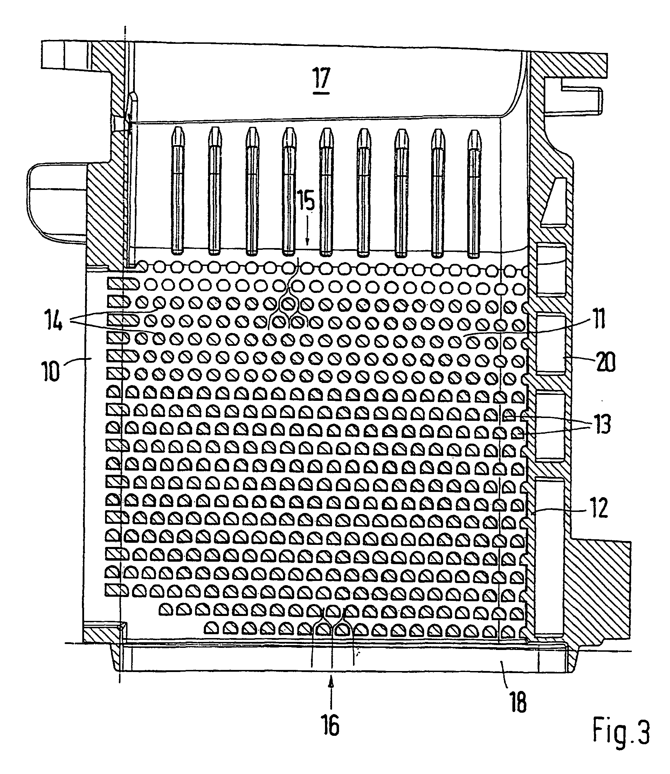

Zur Vergrößerung der Oberfläche der den Rauchgaskanal umgebenden Wärmetauscherwänden 11 und 12 sind Reihen 13 von Noppen 14 angeformt, wie Fig. 3 deutlich zeigt. Die Reihen 13 verlaufen quer zur Strömungsrichtung 25 des Rauchgases. Die Reihen 13 sind mit ihren Noppen 14 jeweils auf Lücke versetzt, wie die Fig. 3 zeigt. Die Noppen 14 sind beabstandet und stabförmig abstehend an den Wärmetauscherwänden 11 und 12 angeformt. Die Rauchgase werden von Reihe zu Reihe 13 umgelenkt, so dass sich im gesamten Rauchgaskanal Turbulenzen bilden, die den Wärmeaustausch vom Rauchgas zum Wasser im Wärmetauscher 20 verbessern.

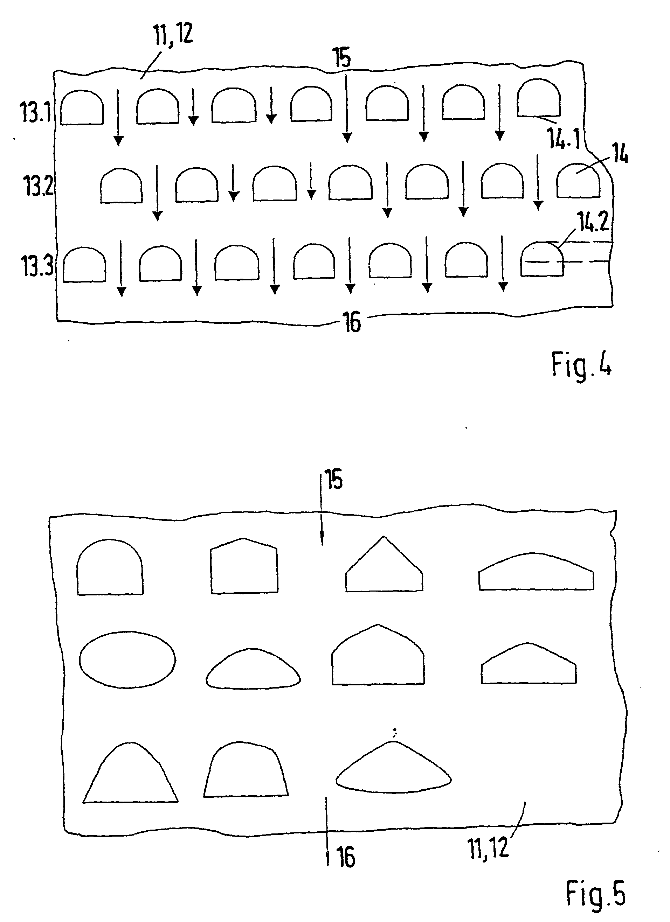

Wie die vergrößerte Teilansicht nach Fig. 4 zeigt, sind die Reihen 13 von Noppen 14 in Strömungsrichtung 25 beabstandet, wobei der Abstand in etwa der Abmessung der Noppen 14 in Strömungsrichtung 25 entspricht. Derselbe Abstand besteht auch zwischen den Noppen 14 in den Reihen. Die Noppen 14 weisen auf der der Einströmseite des Rauchgases zugekehrten Seite einen Anfangsabschnitt 14.2 mit sich kontinuierlich vergrößerndem Querschnitt auf und können dabei kreisbogenförmig oder dachförmig ausgebildet sein, wie die Fig. 5 an verschiedenen Querschnitten der Noppen 14 zeigt. Auf der der Ausströmseite des Rauchgases zugekehrten Seite enden die Noppen 14 mit einem Querschnitt 14.1, der annähernd senkrecht zur Strömungsrichtung 25 verläuft.

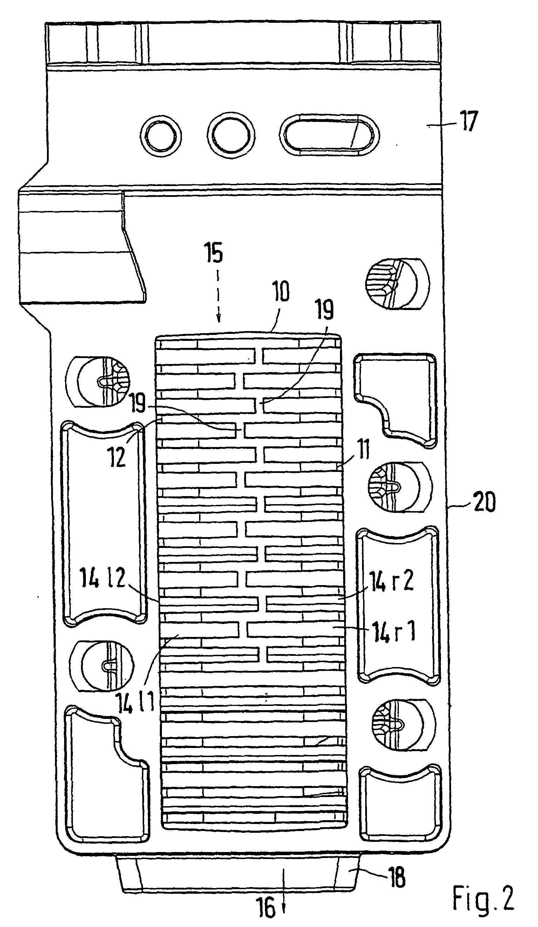

In der Frontseite des Wärmetauschers 20 ist eine Inspektionsöffnung 10 eingebracht, die mittels eines (nicht dargestellten) Deckels normalerweise verschlossen ist. Nach dem Abnehmen des Deckels ist der Rauchgaskanal zugänglich, so dass die zwischen den Noppen 14 gebildeten Gassen gereinigt werden können. Dazu sind spezielle Bürsten oder Werkzeuge vorgesehen. Wie die Fig. 1 und 2 zeigen, sind an den einander gegenüberliegenden Wärmetauscherwänden 11 und 12 die Noppen als rechte Noppen 14r1 und 14r2 und linke Noppen 14l1 und 14l2 aufeinander ausgerichtet und erstrecken sich etwa bis zur Mitte des Rauchgaskanals, wie Fig. 2 zeigt. Sie enden jedoch in einem Abstand 19 voneinander. Dieser Abstand 19 ist von Reihe zu Reihe der Noppen im Bezug auf die Mittelebene auf abwechselnde Seiten versetzt. In aufeinander ausgerichteten Reihen von Noppen 14 sind die Querschnitte der Noppenpaare gleich. Über die gesamten Wärmetauscherwände 11 und 12 können jedoch auch Reihen von Noppenpaaren verschiedene Querschnitte aufweisen.

Das anfallende Kondensat läuft an den Noppen 14 gut ab und gelangt über den Rauchgasauslass 18 zu einer Kondensatauffangeinrichtung des Gasbrennwertgerätes. Dasselbe gilt auch für die von den Noppen 14 beim Reinigen des Wärmetauschers 20 entfernten Partikel.

## Patentansprüche

1. Wärmetauscher für ein Gasbrennwertgerät mit mindestens einem Rauchgaskanal, der von wassergekühlten Wärmetauscherwänden mit einer Oberflächenstruktur umgeben und zur Reinigung über eine Inspektionsöffnung zugänglich ist, wobei die Oberflächenstruktur aus quer zur Strömungsrichtung (25) des Rauchgases gerichteten Reihen (13, 13.1. 13.2, 13.3) von stabförmigen, an den Wärmetauscherwänden (11, 12) abstehend angeformten Noppen (14) besteht, und wobei die Noppen (14) in Strömungsrichtung (25) benachbarter Reihen (13.1, 13.2, 13.3) jeweils auf Lücke angeordnet sind, **dadurch gekennzeichnet, dass** die Noppen (14) in der Strömungsrichtung (25) zumindest einen Anfangsabschnitt (14.2) mit kontinuierlich zunehmendem Querschnitt aufweisen, dass die Noppen (14) einander gegenüberliegender Wärmetauscherwände (11, 12) aufeinander ausgerichtet sind und etwa in der Mitte zwischen den Wärmetauscherwänden (11, 12) in einem Abstand (19) zueinander enden, dass der Abstand (19) der Noppen in Strömungsrichtung benachbarter Reihen abwechselnd gegenüber der Mitte zwischen den Wärmetauscherwänden versetzt ist, und dass zumindest die aufeinander ausgerichteten Paare der Noppen (14) der einander gegenüberliegenden Wärmetauscherwände (11, 12) einen gleichen Querschnitt aufweisen.

2. Wärmetauscher nach Anspruch 1,
**dadurch gekennzeichnet,**
**dass** zwischen den Reihen (13.1, 13.2, 13.3) quer zur Strömungsrichtung (25) durchgehende, gerade gassen frei gehalten werden, wodurch die Noppen (14) ober- und unterseitig über den gesamten Wärmetauscherquerschnitt mit einem geeigneten Reinigungswerkzeug oder Reinigungsmedium zur Inspektion und Reinigung zugänglich werden.

3. Wärmetauscher nach Anspruch 1 oder 2,
**dadurch** gekennzeichent,
dass er als Metallgußteil ausgebildet oder aus Metallgußteilen modulartig zusammengesetzt ist, wobei vorzugsweise Aluminium-Gußteile verwendet sind.

4. Wärmetauscher nach einem der Ansprüche 1 bis 3,
**dadurch gekennzeichnet,**
**dass** die Reihen (13.1, 13.2, 13.3) von Noppen (14) in Strömungsrichtung (25) des Rauchgases einen Abstand aufweisen, der etwa der Abmessung der Noppen (14) in Strömungsrichtung (25) entspricht.

5. Wärmetauscher nach einem der Ansprüche 1 bis 4,
**dadurch gekennzeichnet,**
**dass** die Noppen (14) der Einströmseite (15) des Rauchgaskanals zugekehrt im Querschnitt kreisbogenförmig oder dachförmig auslaufen.

6. Wärmetauscher nach einem der Ansprüche 1 bis 5,
**dadurch gekennzeichnet,**
**dass** die Noppen (14) der Ausströmseite (16) des Rauchgaskanals zugekehrt im Querschnitt nahezu senkrecht zur Strömungsrichtung (25) enden.

7. Wärmetauscher nach einem der Ansprüche 1 bis 6,
**dadurch gekennzeichnet,**
**dass** die Strömungsrichtung (25) des Rauchgaskanals vertikal von oben nach unten gerichtet ist.

## Claims

1. Heat exchanger for a gas-fired condensing boiler, with at least one flue-gas duct which is surrounded by water-cooled heat exchanger walls having a surface structure and which is accessible for cleaning via an inspection port, the surface structure consisting of rows (13, 13.1, 13.2, 13.3) of bar-shaped bosses (14) integrally formed in a projecting manner on the heat exchanger walls (11, 12), the said rows being directed transversely with respect to the direction of flow (25) of the flue gas, and the bosses (14) of rows (13.1, 13.2, 13.3) adjacent in the direction of flow (25) being arranged in each case in a staggered manner, **characterized in that** the bosses (14) have in the direction of flow (25) at least one initial portion (14.2) of continuously increasing cross section, **in that** the bosses (14) of heat exchanger walls (11, 12) lying opposite one another are aligned with one another and end at a distance (19) from one another approximately in the middle between the heat exchanger walls (11, 12), **in that** the distance (19) between the bosses of rows adjacent in the direction of flow is offset alternately with respect to the middle between the heat exchanger walls, and **in that** at least the pairs, aligned with one another, of bosses (14) of the heat exchanger walls (11, 12) lying opposite one another have an identical cross section.

2. Heat exchanger according to Claim 1, **characterized in that** continuous straight corridors are kept free between the rows (13.1, 13.2, 13.3) transversely with respect to the direction of flow (25), with the result that the bosses (14) become accessible on the top side and on the underside, over the entire heat exchanger cross section, for inspection and cleaning by means of a suitable cleaning tool or cleaning medium.

3. Heat exchanger according to Claim 1 or 2, **characterized in that** it is produced as a metal casting or is assembled in a modular manner from metal castings, preferably aluminium castings being used.

4. Heat exchanger according to one of Claims 1 to 3, **characterized in that** the rows (13.1, 13.2, 13.3) of bosses (14) are, in the direction of flow (25) of the flue gas, at a distance which corresponds approximately to the dimension of the bosses (14) in the direction of flow (25).

5. Heat exchanger according to one of Claims 1 to 4, **characterized in that** the bosses (14) terminate, facing the inflow side (15) of the flue-gas duct, in a cross section which is in the form of an arc of a circle or is roof-shaped.

6. Heat exchanger according to one of Claims 1 to 5, **characterized in that** the bosses (14) terminate, facing the outflow side (16) of the flue-gas duct, in a cross section virtually perpendicularly with respect to the direction of flow (25).

7. Heat exchanger according to one of Claims 1 to 6, **characterized in that** the direction of flow (25) of the flue-gas duct is directed vertically from the top downwards.

## Revendications

1. Echangeur de chaleur de chaudière à gaz à condensation, comprenant au moins un canal des gaz de combustion, entouré par les parois de l'échangeur de chaleur, refroidies à l'eau et ayant une structure de surface, et accessible pour le nettoyage par une ouverture d'inspection, la structure de surface étant constituée de rangées (13, 13.1, 13.2, 13.3), orientées transversalement par rapport à la direction d'écoulement (25) des gaz de combustion, de plots (14) en forme de barres dressées sur les parois de l'échangeur de chaleur (11, 12), les plots (14) de rangées voisines (13.1, 13.2, 13.3) dans la direction d'écoulement (25) étant respectivement disposés dans des creux,
**caractérisé en ce que**
les plots (14) présentent, dans la direction d'écoulement (25), au moins une section initiale (14.2) leur section transversale augmentant en continu, les plots (14) de parois opposées (11, 12) sont orientés les uns vers les autres et se terminent approximativement au centre entre les parois de l'échangeur de chaleur (11, 12) à une certaine distance (19) les uns des autres, la distance (19) entre les plots de rangées voisines dans la direction d'écoulement est décalée en alternance par rapport au centre entre les parois de l'échangeur de chaleur, et au moins les paires de plots (14) orientées les unes vers les autres des parois de l'échangeur de chaleur (11, 12) opposées présentent une section transversale identique.

2. Echangeur de chaleur selon la revendication 1,
**caractérisé en ce qu'**
les rangées (13.1, 13.2, 13.3), laisser libres des passages traversants rectilignes transversalement par rapport à la direction d'écoulement (25), ce qui rend accessibles les plots (14) par le haut ou par le bas sur la totalité de la section transversale de l'échangeur de chaleur avec un outil de nettoyage ou un produit de nettoyage approprié, pour l'inspection et le nettoyage.

3. Echangeur de chaleur selon la revendication 1 ou 2,
**caractérisé en ce qu'**
il est configuré sous forme de pièce métallique moulée ou se compose de façon modulaire de pièces métalliques moulées, les pièces moulées étant de préférence en aluminium.

4. Echangeur de chaleur selon l'une des revendications 1 à 3,
**caractérisé en ce que**
les rangées (13.1, 13.2, 13.3) de plots (14) présentent, dans la direction d'écoulement (25) des gaz de combustion, une distance qui correspond approximativement à la dimension des plots (14) dans la direction d'écoulement (25).

5. Echangeur de chaleur selon l'une des revendications 1 à 4,
**caractérisé en ce que**
les plots (14) tournés vers le côté arrivée (15) du canal des gaz de combustion s'étendent en forme d'arc de cercle ou en forme de triangle dans la section transversale.

6. Echangeur de chaleur selon l'une des revendications 1 à 5,
**caractérisé en ce que**
les plots (14) tournés vers le côté évacuation (16) du canal des gaz de combustion se terminent approximativement perpendiculairement à la direction d'écoulement (25) dans la section transversale.

7. Echangeur de chaleur selon l'une des revendications 1 à 6,
**caractérisé en ce que**
la direction d'écoulement (25) du canal des gaz de combustion est orientée verticalement du haut vers le bas.
